# EUROPEAN PATENT SPECIFICATION

(11) **EP 4 027 246 B1**
(45) Date of publication and mention of the grant of the patent: **06.12.2023**
(21) Application number: 21823719.6
(22) Date of filing: 06.05.2021
(51) Int. Cl.: G06F 11/36

(54) **METHOD AND APPARATUS FOR DEBUGGING APPLET, ELECTRONIC DEVICE AND STORAGE MEDIUM**
VERFAHREN UND VORRICHTUNG ZUM DEBUGGEN EINES APPLETS, ELEKTRONISCHE VORRICHTUNG UND SPEICHERMEDIUM
PROCÉDÉ ET APPAREIL DE DÉBOGAGE D'APPLET, DISPOSITIF ÉLECTRONIQUE ET SUPPORT DE STOCKAGE

(30) Priority: 16.11.2020 CN 202011282569
(43) Date of publication of application: 13.07.2022
(73) Proprietor: Baidu Online Network Technology (Beijing) Co., Ltd., Beijing 100085 (CN)
(72) Inventor: ZHANG, Shuang, Beijing 100085 (CN); ZHANG, Zimeng, Beijing 100085 (CN)
(74) Representative: Stöckeler, Ferdinand
(86) International application number: PCT/CN2021/091891
(87) International publication number: WO 2022/100033

(56) References cited:
- CN-A- 110 032 512
- CN-A- 110 704 321
- CN-A- 110 781 080
- CN-A- 110 795 354
- CN-A- 110 837 473
- CN-A- 111 176 986
- CN-A- 112 214 416

## Description

### TECHNICAL FIELD

The present disclosure relates to a field of a computer technology, and in particular to a computer communication and software debugging technologies. More specifically, the present disclosure provides a method and an apparatus of debugging an applet, an electronic device, and a storage medium.

### BACKGROUND

An applet refers to an application embedded in software that may be used without downloading and installing. Before running the applet, the applet needs to be debugged to correct a syntax error or a logic error in the applet.

The most important part in applet debugging is to perform a breakpoint debugging, including interrupting an execution of the applet at a target location of a code and presenting a detail of a variable on a debugging panel on a desktop, so that a user may correct the applet based on the detail of the variable. However, during the breakpoint debugging, the applet is in an interrupted state and may fail to respond to a debugging instruction of a debugging tool, which may cause a debugging difficulty, a low debugging efficiency and a poor debugging effect.

CN 110 837 473A discloses an application program debugging method, a device, a terminal and a storage medium, belonging to the field of computer technology. The method includes the following steps: establishing a communication connection with an application program on a second terminal; based on the communication connection, obtaining the second code of the application program of the second terminal, which is different from the source code of the application program; when receiving the debugging instruction for the second code, debugging the second code.

### SUMMARY

The invention is set out in the appended set of claims. A method and an apparatus of debugging an applet, an electronic device, and a storage medium are provided.

According to a first aspect, a method of debugging an applet containing a plurality of debugging modules is provided, and the method includes: selecting at least one debugging module from the plurality of debugging modules as a target debugging module according to a first debugging instruction; running the applet so that the target debugging module is interrupted in response to running to the target debugging module in the applet; and awakening the interrupted target debugging module for debugging according to a second debugging instruction, so as to generate a debugging result.

According to a second aspect, an electronic device is provided, and the electronic device includes: at least one processor; and a memory communicatively connected to the at least one processor, wherein the memory stores instructions executable by the at least one processor, and the instructions, when executed by the at least one processor, cause the at least one processor to implement the method of debugging the applet provided according to the present disclosure.

According to a third aspect, a non-transitory computer-readable storage medium having computer instructions stored thereon is provided, wherein the computer instructions are configured to cause a computer to implement the method of debugging the applet provided according to the present disclosure.

According to a fourth aspect, a computer program product containing a computer program is provided, wherein the computer program, when executed by a computer, causes the computer to implement the method described above.

It should be understood that content described in this section is not intended to identify key or important features in the embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used to better understand the solution and do not constitute a limitation to the present disclosure.
FIG. 1 shows an exemplary system architecture in which a method and an apparatus of debugging an applet may be applied according to an embodiment of the present disclosure.
FIG. 2 shows a flowchart of a method of debugging an applet according to an embodiment of the present disclosure.
FIG. 3 shows a flowchart of a method of awakening an interrupted target debugging module for debugging according to a second debugging instruction according to an embodiment of the present disclosure.
FIG. 4 shows a flowchart of a method of debugging an applet according to another embodiment of the present disclosure.
FIG. 5 shows a flowchart of a method of debugging an applet according to another embodiment of the present disclosure.
FIG. 6 shows a flowchart of a method of debugging an applet according to another embodiment of the present disclosure.
FIG. 7 shows a flowchart of a method of debugging an applet according to another embodiment of the present disclosure.
FIG. 8 shows a flowchart of a method of debugging an applet in a simulated environment according to an embodiment of the present disclosure.
FIG. 9 shows a flowchart of a method of debugging an applet in a real environment according to an embodiment of the present disclosure.
FIG. 10 shows a block diagram of an apparatus of debugging an applet according to an embodiment of the present disclosure.
FIG. 11 shows a block diagram of an apparatus of debugging an applet according to an embodiment of the present disclosure.
FIG. 12 shows a block diagram of an electronic device for implementing a method of debugging an applet according to an embodiment of the present disclosure.

### DETAILED DESCRIPTION OF EMBODIMENTS

The following describes exemplary embodiments of the present disclosure with reference to the accompanying drawings, which include various details of the embodiments of the present disclosure to facilitate understanding, and should be considered as merely exemplary. Therefore, those of ordinary skilled in the art should realize that various changes and modifications may be made to the embodiments described herein without departing from the scope of the present disclosure. Likewise, for clarity and conciseness, descriptions of well-known functions and structures are omitted in the following description.

An applet may be run in different operating platforms (such as Android, IOS, web browser, etc.), and there may be some limitations on an interaction between the operating platform and a desktop debugging tool. For example, due to a limitation of the IOS operating system, an IOS terminal may not communicate directly with the desktop debugging tool, that is, a code breakpoint and debugging function of a mobile terminal operating environment may not be achieved.

In a process of implementing the present disclosure, the inventor found that the running of the applet may be simulated in a desktop development tool, and then the applet may be debugged through a communication between a debugging program and a simulated applet.

However, whether in a real running environment or a simulated running environment, an instruction interaction between the debugging tool and a process of running the applet is required when debugging the applet. The most important part in applet debugging is to perform a breakpoint debugging. During the breakpoint debugging, the applet is in an interrupted state and may fail to respond to an instruction of the debugging tool, which may cause a debugging difficulty, a low debugging efficiency and a poor debugging effect.

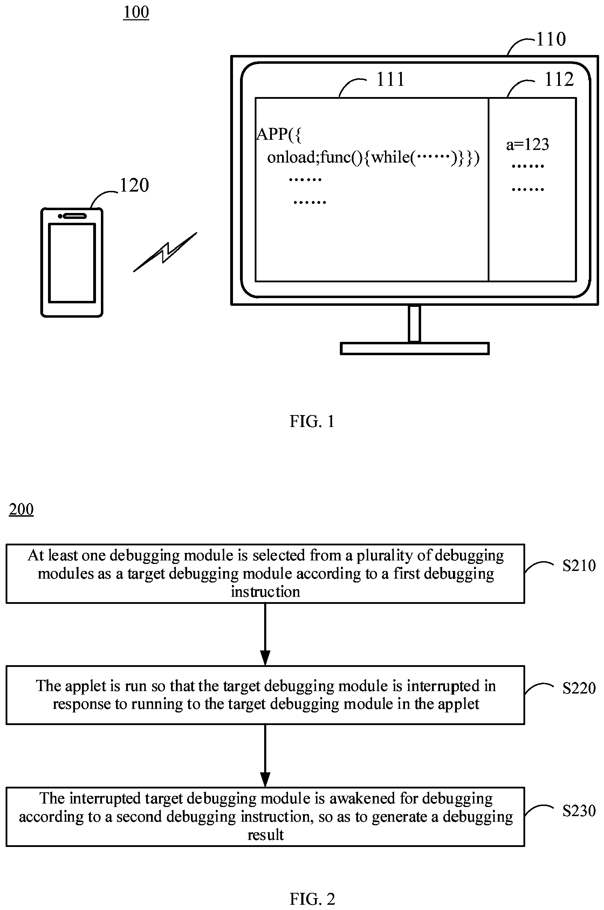

FIG. 1 shows an exemplary system architecture 100 in which a method and an apparatus of debugging an applet may be applied according to an embodiment of the present disclosure. It should be noted that FIG. 1 is only an example of a system architecture in which the embodiments of the present disclosure may be applied, so as to facilitate those skilled in the art to understand the technical content of the present disclosure. It does not mean that the embodiments of the present disclosure may not be applied to other devices, systems, environments or scenes.

As shown in FIG. 1, the system architecture 100 according to the embodiment may include a terminal device 110 and a terminal device 120. The terminal device 110 and the terminal device 120 may be connected through a matched external interactive interface to communicate directly, or may communicate indirectly through a forwarding of a cloud server.

An applet may be run in the terminal device 120. The terminal device 110 includes a development tool for a development of the applet. The development tool may include a simulator 111 for simulating the running of the applet and a debugger 112 for debugging the applet. The debugger 112 may provide a debugging panel to a user for operating and viewing data.

When the user needs to debug the applet in the terminal device 120, the debugging may be implemented through a direct interaction between the terminal device 110 and the terminal device 120, or implemented through an interaction between the debugger 112 and the simulator 111 on the terminal device 110, or implemented by enabling the terminal device 110 to interact with the terminal device 120 through the forwarding of the cloud server. For example, a terminal of the Android system may directly communicate with the debugger 112 on the desktop due to an open source of the system. Therefore, an applet in the Android system may be debugged directly in the real running environment. For another example, a terminal of the IOS system may not directly communicate with the debugger 112 on the desktop. Therefore, the running of the applet may be simulated in the simulator 111, and the applet may be debugged through the interaction between the simulator 111 and the debugger 112. For another example, in order to perform the debugging of a real IOS terminal, the communication between the debugger 112 and the IOS terminal may be implemented through the forwarding of the cloud server, so as to perform the debugging of the applet. For another example, an applet in the web browser may communicate directly with the debugger 112, so that the applet in the web browser may be debugged. Therefore, the present disclosure may be implemented to debug the applet on a plurality of platforms.

Exemplarily, the user may click or input a debugging instruction on the debugging panel provided by the debugger 112 on the terminal device 110. The debugger 112 may transmit the debugging instruction to the terminal device 120. After receiving the debugging instruction, the terminal device 120 may debug the applet and generate a debugging result, and the generated debugging result may be then returned to the debugger 112 and presented on the debugging panel of the debugger 112.

Exemplarily, since the simulator 111 may simulate the running of the applet, after the user clicks or inputs the debugging instruction on the debugging panel of the debugger 112, the debugger 112 may transmit the debugging instruction to the simulator 111. After receiving the debugging instruction, the simulator 111 may debug the applet and generate a debugging result, and the generated debugging result may be then returned to the debugger 112 and presented on the debugging panel of the debugger 112.

Exemplarily, the debugging instruction clicked or input by the user on the debugging panel may indicate viewing a value of a variable a, then the debugging result returned by the terminal device 120 may be the value of the variable, such as a=123.

FIG. 2 shows a flowchart of a method of debugging an applet according to an embodiment of the present disclosure.

As shown in FIG. 2, a method 200 of debugging an applet may include operation S210 to operation S230.

In operation S210, at least one debugging module is selected from a plurality of debugging modules as a target debugging module according to a first debugging instruction.

According to the embodiments of the present disclosure, for an applet to be debugged, some debugging codes may be written into the applet, so that the applet are divided into a plurality of debugging modules by the debugging codes written to it, and the debugging for the applet may be converted into a debugging for each debugging module. Exemplarily, the debugging code may be written at a location where a breakpoint debugging needs to be performed according to an actual demand, so that the breakpoint debugging may be performed when running to each debugging module in the applet. The plurality of debugging modules can be executed in an order.

Exemplarily, the breakpoint debugging needs to be performed on a debugging module in a second line of the applet, a debugging module in a third line of the applet, a debugging module in a fifth line of the applet, a debugging module in a sixth line of the applet, and a debugging module in a ninth line of the applet. The user may select the debugging module in the second line of the applet, the debugging module in the third line of the applet, and the debugging module in the ninth line of the applet as target debugging modules for debugging.

Specifically, a Google's open source Chrome debugging panel may be used as a debugger. The user may select the second line, the third line and the ninth line on the development tool, and then click an instruction indicating starting the breakpoint debugging on the debugging panel. The debugger may transmit the instruction to the simulator or the real running terminal.

It should be noted that in the real running environment, the debugger may transmit the instruction to the real running terminal, and in the simulated running environment, the debugger may transmit the instruction to the simulator in the development tool. The development tool for the applet may provide a simulator for simulating the applet, and may have a good application for a breakpoint debugging function of the simulator.

According to the embodiments of the present disclosure, an execution environment of the applet may be in a thread in the simulator or the real running terminal. The thread may be, for example, a first thread. After receiving the debugging instruction, the simulator or the real running terminal may store location information for the second line, the third line and the ninth line selected by the user in the first thread, which indicates that the debugging module in the second line, the debugging module in the third line, and the debugging module in the ninth line are the target debugging modules.

In operation S220, the applet is run so that the target debugging module is interrupted in response to running to the target debugging module in the applet.

According to the embodiments of the present disclosure, when running to each debugging module in the applet, the debugging module may compare a location of the debugging module with a location of the target debugging module stored in the first thread, so as to determine whether the debugging module is the target debugging module. If so, it indicates that the user needs to perform the breakpoint debugging on the debugging module. In this case, a current running status data of the applet may be transmitted to the debugger firstly. The running status data may include a location information, such as a current line number, the number of remaining lines, and so on. The running status data may further include some specific variable information for a current running location. After receiving the running status data, the debugger may present the running status data on the debugging panel for the user to view.

According to the embodiments of the present disclosure, after transmitting the current running status data to the debugger, a current target debugging module needs to be interrupted, so as to facilitate the user to perform a breakpoint debugging operation. Exemplarily, in the simulator, the first thread may be a worker thread, which is one of a plurality of threads for undertaking a task that are generated for creating a multithreaded environment for JavaScript. The worker thread may use an Atomics.wait method to interrupt the applet, that is, interrupt the current target debugging module. In a real client, the applet may be interrupted using a terminal capability for implementing a breakpoint. The terminal capability may be a capability that may be implemented by the terminal and may be implemented by using a software program. The terminal capability may further include a message terminal capability for implementing a message transmission, and so on.

In operation S230, the interrupted target debugging module is awakened for debugging according to a second debugging instruction, so as to generate a debugging result.

According to the embodiments of the present disclosure, after being interrupted, the applet waits for a debugging instruction of the debugger. However, because being interrupted, the applet may fail to respond to the instruction directly transmitted by the debugger. In the embodiments of the present disclosure, a second thread is provided in the simulator or the real client to receive the debugging instruction of the debugger, and then the second thread stores the debugging instruction, for example, in a preset storage space. Then, a wake-up instruction is transmitted to the first thread to awaken the interrupted target debugging module. After the target debugging module is awakened, the stored debugging instruction may be read, and then a debugging operation may be performed according to the debugging instruction, so as to generate a corresponding debugging result.

According to the embodiments of the present disclosure, the second thread mainly functions to store and forward the instruction and the message between the first thread and the debugger. In the simulator, the second thread may be a type of worker thread. In the real running environment, the second thread may be implemented by using the terminal capability for implementing the message transmission.

Exemplarily, the debugging instruction may indicate acquiring a value of a variable a. The target debugging module may solve the value of the variable a within a current scope, and then return the value of the variable a to the second thread. The second thread may return the value of the variable a to the debugger, and the debugger may present the value of the variable a to the user. The debugging instruction may also indicate assigning a value to a variable b in the target debugging module, and the debugging instruction may contain an expression of b=456. The target debugging module may assign the variable b within the current scope to 456, and then transmit a message of a successful assignment of b=456 to the second thread, and the second thread may forward the message to the debugger.

According to the embodiments of the present disclosure, after returning the debugging result, the current target debugging module is interrupted to wait for a new instruction.

According to the embodiments of the present disclosure, at least one debugging module of the plurality of debugging modules is selected as the target debugging module according to the first debugging instruction, the applet is run so that the target debugging module is interrupted when running to the target debugging module in the applet, and the interrupted target debugging module is awakened for debugging according to the second debugging instruction, so as to generate the debugging result. Because the target debugging module is interrupted to wait for the debugging instruction when running to the target debugging module in the applet, and the target debugging module is awakened for debugging after receiving the debugging instruction, the breakpoint debugging for the applet may be implemented, and a debugging efficiency and a debugging effect may be improved.

According to the embodiments of the present disclosure, the method of debugging the applet may further include storing the received second debugging instruction and generating a wake-up instruction for awakening the applet.

Specifically, the storing the received second debugging instruction and generating a wake-up instruction is performed in the second thread. After receiving the debugging instruction of the debugger, the second thread may store the debugging instruction. In the simulator, the instruction may be stored, for example, using a SharedArrayBuffer method. The SharedArrayBuffer may represent a shared memory. In the real running terminal, a memory of the terminal may be used as the shared memory. The first thread and the second thread may communicate through the shared memory. After storing the debugging instruction in the shared memory, the second thread may transmit the wake-up instruction to the first thread so as to awaken the interrupted target debugging module. Exemplarily, in the simulator, the worker thread may be awakened using the Atomics.notify method. In the real running terminal, the target debugging module may be awakened using the terminal capability for implementing a wake-up function.

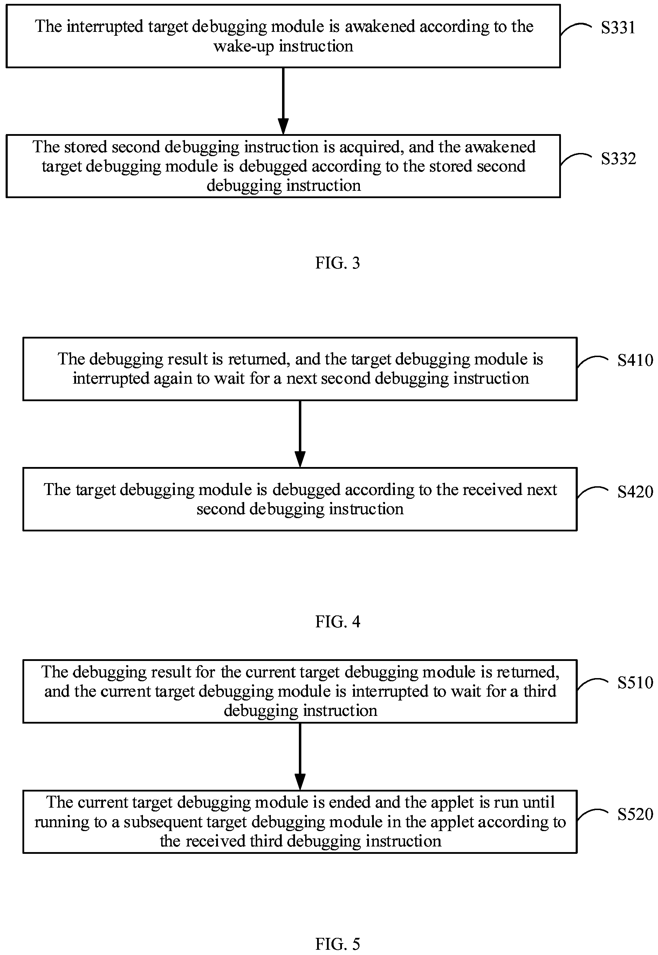

FIG. 3 shows a flowchart of a method of awakening an interrupted target debugging module for debugging according to a second debugging instruction according to an embodiment of the present disclosure.

As shown in FIG. 3, the method may include operation S331 to operation S332.

In operation S331, the interrupted target debugging module is awakened according to the wake-up instruction.

In operation S332, the stored second debugging instruction is acquired, and the awakened target debugging module is debugged according to the stored second debugging instruction.

According to the embodiments of the present disclosure, in the simulator, the second thread may awaken the target debugging module in the worker thread by using the Atomics.notify method. In the real running terminal, the target debugging module may be awakened using the terminal capability for implementing the wake-up function. After the target debugging module is awakened, the debugging instruction in the shared memory is read firstly, and then the debugging operation is performed.

According to the embodiments of the present disclosure, the second thread may store the received debugging instruction in the shared memory, and then awaken the first thread. After being awakened, the first thread may read the instruction in the shared memory so as to perform the debugging. The first thread and the second thread may communicate through the shared memory, so that the breakpoint debugging may be performed on the target debugging module.

FIG. 4 shows a flowchart of a method of debugging an applet according to another embodiment of the present disclosure.

As shown in FIG. 4, the method may include operation S410 to operation S420.

In operation S410, the debugging result is returned, and the target debugging module is interrupted again to wait for a next second debugging instruction.

In operation S420, the target debugging module is debugged according to the received next second debugging instruction.

According to the embodiments of the present disclosure, after returning the debugging result, the current target debugging module continues to be interrupted to wait for a new instruction. The new instruction may be a second debugging instruction indicating debugging the current target debugging module. After receiving the new debugging instruction of the debugger, the second thread may store the new debugging instruction in the shared memory. Then, a wake-up instruction is transmitted to the first thread to awaken the interrupted target debugging module. After the target debugging module is awakened, the stored new debugging instruction may be read, and then the debugging operation may be performed according to the new debugging instruction, so as to generate a new debugging result. Then, the new debugging result is returned to the second thread, the second thread transmits the new debugging result to the debugger, and the debugger presents the new debugging result to the user.

Exemplarily, after the user transmits the instruction indicating acquiring the value of the variable a through the debugger, the target debugging module may return a=123 after being debugged. After viewing a=123, the user may transmit an instruction of a=456 through the debugger. The target debugging module assigns a to 456 after being debugged, and then returns the debugging result of a=456.

It should be noted that after returning the new debugging result of a=456, the current target debugging module continues to be interrupted to wait for a next instruction.

FIG. 5 shows a flowchart of a method of debugging an applet according to another embodiment of the present disclosure.

As shown in FIG. 5, the method may include operation S510 to operation S520.

In operation S510, the debugging result for the current target debugging module is returned, and the current target debugging module is interrupted to wait for a third debugging instruction.

In operation S520, the current target debugging module is ended and the applet is run until running to a subsequent target debugging module in the applet according to the received third debugging instruction.

According to the embodiments of the present disclosure, after returning the debugging result, the current target debugging module continues to be interrupted to wait for a new instruction. The new instruction may be a third debugging instruction indicating ending the current target debugging module and then running to a subsequent target debugging module for debugging. The subsequent target debugging module may be next to the current target debugging module or may be the one specified by the user. For example, the current target debugging module may be the debugging module in the second line, and the subsequent target debugging module may be the debugging module in the third line, or may be the target debugging module in the ninth line specified by the user.

According to the embodiments of the present disclosure, after receiving the third debugging instruction of the debugger, the second thread may store the third debugging instruction in the shared memory. Then, a wake-up instruction is transmitted to the first thread to awaken the interrupted target debugging module. After being awakened, the target debugging module may read the stored third debugging instruction. Then, according to the third debugging instruction, the current debugging module is ended, the applet is run until running to the subsequent target debugging module, such as the target debugging module in the ninth line, and then a running status data for the ninth line is transmitted to the second thread, and the second thread may transmit the running status data to the debugger. Then, the target debugging module in the ninth line is interrupted to wait for an instruction for debugging the module.

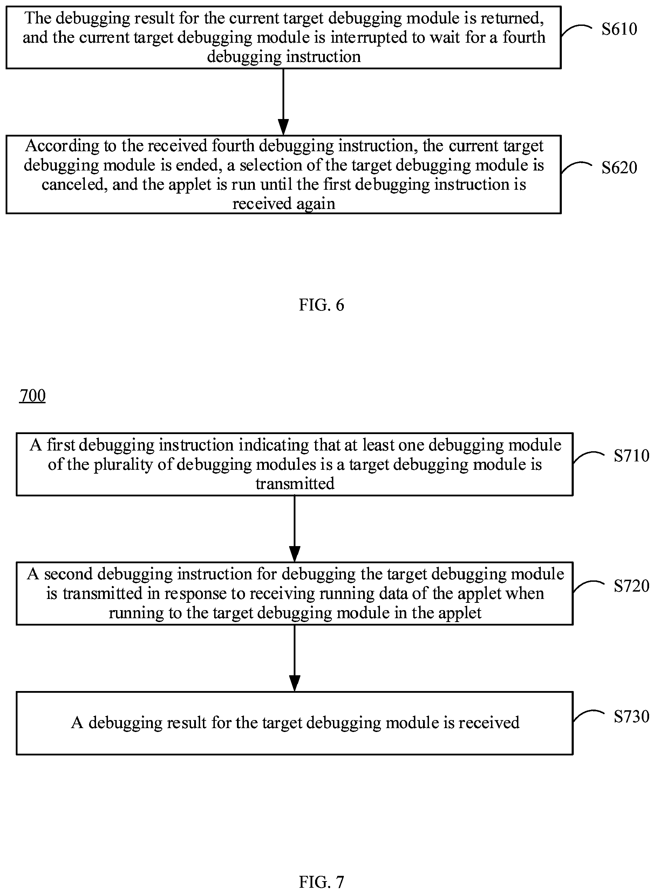

FIG. 6 shows a flowchart of a method of debugging an applet according to another embodiment of the present disclosure.

As shown in FIG. 6, the method may include operation S610 to operation S620.

In operation S610, the debugging result for the current target debugging module is returned, and the current target debugging module is interrupted to wait for a fourth debugging instruction.

In operation S620, according to the received fourth debugging instruction, the current target debugging module is ended, a selection of the target debugging module is canceled, and the applet is run until the first debugging instruction is received again.

According to the embodiments of the present disclosure, after returning the debugging result, the current target debugging module is interrupted to wait for a new instruction. The new instruction may be a fourth debugging instruction indicating ending the breakpoint debugging for all the target debugging modules.

According to the embodiments of the present disclosure, after receiving the fourth debugging instruction of the debugger, the second thread may store the fourth debugging instruction in the shared memory. Then, a wake-up instruction is transmitted to the first thread to awaken the interrupted target debugging module. After the target debugging module is awakened, the stored fourth debugging instruction may be read. Then, according to the fourth debugging instruction, the current debugging module is ended, the selection of the target debugging module is canceled, and the applet continues to run until the first debugging instruction indicating selecting the target debugging module for breakpoint debugging is received again.

Exemplarily, after reading the fourth debugging instruction, the first thread may end the current target debugging module, and cancel the selection of the debugging module in the second line, the debugging module in the third line, and the debugging module in the ninth line as the target debugging modules. Next, a release message indicating that the selection of the debugging module in the second line, the debugging module in the third line, and the debugging module in the ninth line as the target debugging modules is canceled may be transmitted to the second thread. The second thread may then transmit the release message to the debugger, and the debugger may present the release message to the user. The user may further perform a non-breakpoint debugging.

FIG. 7 shows a flowchart of a method of debugging an applet according to another embodiment of the present disclosure.

As shown in FIG. 7, a method 700 of debugging an applet may include operation S710 to operation S730.

In operation S710, a first debugging instruction indicating that at least one debugging module of the plurality of debugging modules is a target debugging module is transmitted.

According to the embodiments of the present disclosure, for the applet to be debugged, some debugging codes may be written into the applet, so that the applet are divided into a plurality of debugging modules by the debugging codes written to it, and the debugging for the applet may be converted into a debugging for each debugging module. Exemplarily, the debugging code may be written at a location where the breakpoint debugging needs to be performed according to an actual demand, so that the breakpoint debugging may be performed when running to each debugging module in the applet.

Exemplarily, the user may select a location information for breakpoint debugging, and the debugging module at the location selected by the user is the target debugging module. For example, if the user selects the second line, the third line and the ninth line, the debugging modules in the second line, the third line and the ninth line are the target debugging modules.

According to the embodiments of the present disclosure, after selecting the location for debugging, the user may click, on the debugging panel, an instruction indicating starting the breakpoint debugging. The debugger may transmit the instruction to the simulator or the real running terminal on a debugged side. The instruction may contain the location information for the breakpoint debugging selected by the user.

In operation S720, a second debugging instruction for debugging the target debugging module is transmitted in response to receiving running data of the applet when running to the target debugging module in the applet.

In operation S730, a debugging result for the target debugging module is received.

Exemplarily, if the debugger receives the running data for the second line transmitted by the simulator or the client, it indicates that the applet is run to the second line and is interrupted. The user may click or input a debugging instruction of, for example, viewing a value of a variable, on the debugging panel, and the debugger may transmit the debugging instruction to the simulator or the client on the debugged side. After the debugged side generates a debugging result in response to the debugging instruction, the debugging result may be returned to the debugger, and the debugger presents the debugging result to the user for viewing.

According to the embodiments of the present disclosure, the first debugging instruction is transmitted to indicate that at least one debugging module of the plurality of debugging modules is the target debugging module, the second debugging instruction for debugging the target debugging module is transmitted in response to receiving the running data of the applet when running to the target debugging module in the applet, and the debugging result for the target debugging module is received. Because the first debugging instruction is transmitted to indicate that the applet is interrupted to wait for a debugging instruction when running to the target debugging module in the applet, and then the second debugging instruction is transmitted to awaken the target debugging module for debugging, the breakpoint debugging for the applet may be achieved, and the debugging efficiency and the debugging effect may be improved.

According to the embodiments of the present disclosure, the method 700 of debugging the applet may further include transmitting at least one of a third debugging instruction or a fourth debugging instruction in response to receiving a returned debugging result. The third debugging instruction indicates ending the current target debugging module and running to a subsequent target debugging module in the applet. The fourth debugging instruction indicates ending the current target debugging module, canceling a selection of the target debugging module, and continuing to run the applet until the first debugging instruction is received again.

According to the embodiments of the present disclosure, the method 700 of debugging the applet may further include receiving a release message indicating that the selection of the target debugging module is canceled.

According to the embodiments of the present disclosure, the debugger may further transmit the third debugging instruction to instruct the debugged side to end the breakpoint debugging at the current location and jump to a specified location for breakpoint debugging. For example, the third debugging instruction may indicate ending the debugging in the second line and jumping to the ninth line for breakpoint debugging.

According to the embodiments of the present disclosure, the fourth debugging instruction may be also transmitted to instruct the debugged side to end the breakpoint debugging at the current location and cancel the selection of the target debugging module, so as to end the breakpoint debugging and restore the non-breakpoint debugging. After the fourth debugging instruction is transmitted, a release message transmitted by the debugged side may be received, and the release message indicates that the selection of the target debugging module is canceled. Then, the non-breakpoint debugging may be performed.

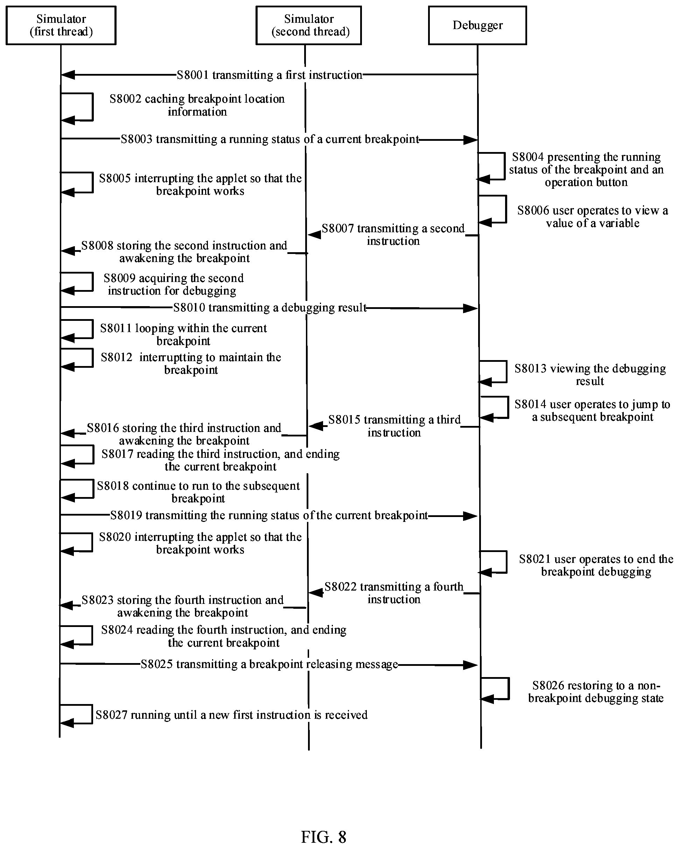

FIG. 8 shows a flowchart of a method of debugging an applet in a simulated environment according to an embodiment of the present disclosure.

As shown in FIG. 8, the method includes operation S8001 to operation S8027.

In operation S8001, the debugger transmits, to the second thread of the simulator, a first instruction indicating starting a breakpoint debugging, and the second thread transmits the first instruction to the first thread of the simulator. The instruction contains a location information for a target debugging module selected by the user for breakpoint debugging.

Exemplarily, the first thread may be a worker thread, the second thread may be a control program, and the applet is run in the worker thread. The target debugging module selected by the user for breakpoint debugging may be the debugging module in the second line, the debugging module in the third line, and the debugging module in the ninth line.

In operation S8002, the first thread caches the location information for the target debugging module selected by the user for breakpoint debugging.

Exemplarily, the location information may be stored as an array [2,3,9],
In operation S8003, when running to the target debugging module in the applet, a running status information for a current breakpoint is transmitted to the second thread, and the second thread transmits the running status information to the debugger.

Exemplarily, when running to the target debugging module in the second line of the applet, the target debugging module in the second line may compare a line number 2 for the target debugging module with a line number in the array [2,3,9], and determine that the array [2,3,9] includes the line number 2. Then, the running status information for the current location may be transmitted to the second thread through a worker. postMessage method, and then forwarded to the debugger through the second thread.

In operation S8004, the debugger presents the running status data for the current breakpoint and an operation button for a user to operate.

In operation S8005, the target debugging module is interrupted, and the current breakpoint works to wait for a debugging instruction.

Exemplarily, the target debugging module may be interrupted through an Atomics.wait(SharedArrayBuffer) method and wait for an instruction stored in the shared memory SharedArrayBuffer by the second thread.

In operation S8006, the user operates on the debugging panel provided by the debugger to view a result for a variable.

In operation S8007, the debugger transmits a second instruction indicating solving the variable to the second thread, and the second instruction contains a variable name that the user needs to view.

In operation S8008, the second thread stores the second instruction in the shared memory, and generates a wake-up instruction for awakening the applet, so as to awaken a target debugging module at the breakpoint.

Exemplarily, the second thread may store the second instruction in the SharedArrayBuffer, and then generate the wake-up instruction by the Atomics.notify(SharedArrayBuffer) method, so as to awaken the target debugging module.

In operation S8009, the target debugging module reads the second instruction in the shared memory and solves the value of the variable.

In operation S8010, the target debugging module transmits a debugging result, that is, a solution result for the variable, to the second thread, and the second thread forwards the solution result for the variable to the debugger.

Exemplarily, the target debugging module may transmit the solution result for the variable to the second thread through the worker. postMessage method.

In operation S8011, the target debugging module loops within a code at the current breakpoint.

Exemplarily, the debugging module may be in a while loop, in which a condition for jumping out of the while loop may be set. If the condition is met, jumping out of the current while may be executed, otherwise the while loop of the current target debugging module is continued. For example, it may be set to execute jumping out of loop in response to returning false and to continue the while loop in response to returning true.

In operation S8012, the target debugging module is interrupted to maintain the breakpoint.

Exemplarily, the target debugging module may be interrupted through the Atomics.wait(SharedArrayBuffer) method and wait for a instruction stored in the shared memory SharedArrayBuffer by the second thread.

In operation S8013, the user views the solution result for the variable on the debugging panel.

In operation S8014, the user clicks on the debugging panel to jump to a subsequent target debugging module.

Exemplarily, the subsequent target debugging module may be a first one following the current target debugging module, or may be a target debugging module at a location specified by the user.

In operation S8015, the debugger transmits a third instruction indicating ending the current target debugging module and jumping to the subsequent target debugging module to the second thread.

In operation S8016, the second thread writes the third instruction into the shared memory, and generates a wake-up instruction for awakening the applet, so as to awaken the target debugging module at the breakpoint.

Exemplarily, the second thread may store the third instruction into the SharedArrayBuffer, and then generate the wake-up instruction by the Atomics.notify(SharedArrayBuffer) method, so as to awaken the target debugging module.

In operation S8017, the target debugging module reads the third instruction in the shared memory, and the running of the current target debugging module is ended.

Exemplarily, jumping out of the while loop of the current target debugging module may be executed in response to returning true, so as to end the running of the current target debugging module.

In operation S8018, the applet continues to run until running to a target debugging module at a subsequent breakpoint.

In operation S8019, the target debugging module transmits a running status information for the current breakpoint to the second thread, and the second thread transmits the running status information to the debugger.

In operation S8020, the target debugging module is interrupted, and the current breakpoint works to wait for a debugging instruction.

In operation S8021, the user clicks on the debugging panel to end all breakpoint debugging operations.

In operation S8022, the debugger transmits the fourth instruction indicating ending the breakpoint debugging to the second thread.

In operation S8023, the second thread writes the fourth instruction into the shared memory, and generates a wake-up instruction for awakening the applet, so as to awaken the target debugging module at the breakpoint.

In operation S8024, the target debugging module reads the fourth instruction in the shared memory, and the running of the current target debugging module is ended.

In operation S8025, the first thread transmits a breakpoint releasing message to the second thread, and the second thread transmits the breakpoint releasing message to the debugger.

In operation S8026, the debugger is restored to a non-breakpoint debugging state.

In operation S8027, the applet in the first thread continues to run, and the above-mentioned process is repeated in response to receiving a new first instruction indicating that a user selects a target debugging module for breakpoint debugging. If the first instruction is not received subsequently, the execution continues to the end.

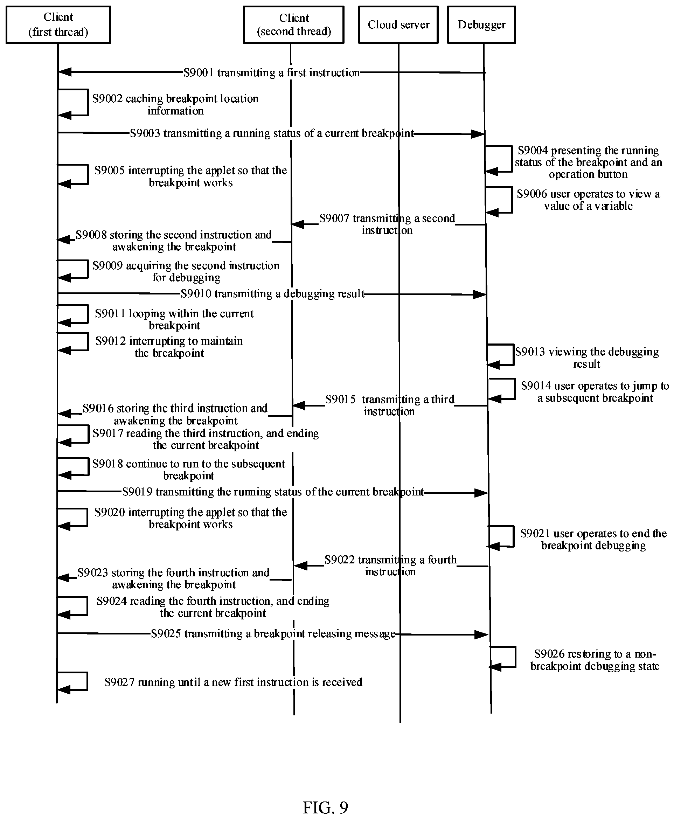

FIG. 9 shows a flowchart of a method of debugging an applet in a real environment according to an embodiment of the present disclosure.

As shown in FIG. 9, the method includes operation S9001 to operation S9027.

According to the embodiments of the present disclosure, in the real environment, since the applet is run in a real client, the interaction between the debugger and the client may be forwarded through a cloud server.

In operation S9001, the debugger transmits a first instruction indicating starting breakpoint debugging to the cloud server, the cloud server transmits the first instruction to the second thread on the client, and the second thread transmits the first instruction to the first thread on the client. The instruction contains a location information for a target debugging module selected by the user for breakpoint debugging.

Exemplarily, both the first thread and the second thread may be an application on the client for debugging the applet, and the applet is run in the first thread.

In operation S9002, the first thread caches the location information for the target debugging module selected by the user for breakpoint debugging.

In operation S9003, when running to the target debugging module in the applet, a running status information for a current breakpoint is transmitted to the second thread, the second thread transmits the running status information to the cloud server, and the cloud server forwards the running status information to the debugger.

In operation S9004, the debugger presents a running status data for a current location and an operation button for a user to operate.

In operation S9005, the target debugging module is interrupted, and the current breakpoint works to wait for a debugging instruction.

Exemplarily, the target debugging module may be interrupted through the terminal capability. The terminal capability of the client may be a method of implementing various capabilities, which may be implemented by programming.

In operation S9006, the user operates on the debugging panel provided by the debugger to view a result for a variable.

In operation S9007, the debugger transmits a second instruction indicating solving the variable to the cloud server, the cloud server forwards the second instruction to the second thread, and the second instruction contains a variable name that the user needs to view.

In operation S9008, the second thread stores the second instruction into the shared memory, and the target debugging module is awakened through the terminal capability.

In operation S9009, the target debugging module reads the second instruction in the shared memory and solves the value of the variable.

In operation S9010, the target debugging module transmits a solution result for the variable to the second thread through a message transmission terminal capability, the second thread transmits the solution result to the cloud server, and the cloud server forwards the solution result to the debugger.

In operation S9011, the target debugging module loops within a code at the current breakpoint.

In operation S9012, the target debugging module is interrupted through a breakpoint terminal capability, so as to maintain the breakpoint.

In operation S9013, the user views the solution result for the variable on the debugging panel.

In operation S9014, the user clicks on the debugging panel to jump to a subsequent target debugging module.

Exemplarily, the subsequent target debugging module may be a first one following the current target debugging module, or may be a target debugging module at a location specified by the user.

In operation S9015, the debugger transmits the third instruction indicating ending the current target debugging module and jumping to the subsequent target debugging module to the cloud server, and the cloud server forwards the third instruction to the second thread on the client.

In operation S9016, the second thread writes the third instruction into the shared memory, and the target debugging module is awakened through the terminal capability.

Exemplarily, the shared memory is a memory of the client.

In operation S9017, the target debugging module reads a third instruction in the shared memory, and the running of the current target debugging module is ended.

In operation S9018, the applet continues to run until running to a target debugging module at a subsequent breakpoint.

In operation S9019, the target debugging module transmits a running status information for the current breakpoint to the second thread, the second thread transmits the running status information to the cloud server, and the cloud server forwards the running status information to the debugger.

In operation S9020, the target debugging module is interrupted, and the breakpoint works to wait for a debugging instruction.

In operation S9021, the user clicks on the debugging panel to end all breakpoint debugging operations.

In operation S9022, the debugger transmits a fourth instruction indicating ending the breakpoint debugging to the second thread.

In operation S9023, the second thread writes the fourth instruction to the shared memory, and the first thread is awakened through the terminal capability.

In operation S9024, the target debugging module reads the fourth instruction in the shared memory, and the running of the current target debugging module is ended.

In operation S9025, the first thread transmits a breakpoint releasing message to the second thread through a message transmission terminal capability, the second thread transmits the breakpoint releasing message to the cloud server, and the cloud server forwards the breakpoint releasing message to the debugger.

In operation S9026, the debugger is restored to the non-breakpoint debugging state.

In operation S9027, the applet in the first thread continues to run, and the above-mentioned process is repeated in response to receiving a new first instruction indicating that a user selects a target debugging module for breakpoint debugging. If the first instruction is not received subsequently, the execution continues to the end.

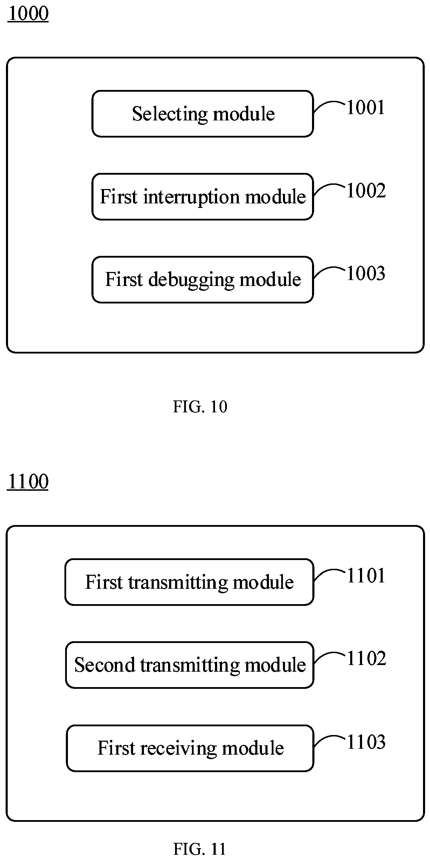

FIG. 10 shows a block diagram of an apparatus of debugging an applet according to an embodiment of the present disclosure.

As shown in FIG. 10, an apparatus 1000 of debugging an applet may include a selecting module 1001, a first interruption module 1002, and a first debugging module 1003.

The selecting module 1001 is used to select at least one debugging module from a plurality of debugging modules as a target debugging module according to a first debugging instruction.

The first interruption module 1002 is used to run the applet so that the target debugging module is interrupted in response to running to the target debugging module in the applet.

The first debugging module 1003 is used to awaken the interrupted target debugging module for debugging according to a second debugging instruction, so as to generate a debugging result.

According to the embodiments of the present disclosure, the apparatus 1000 of debugging the applet may further include a processing module.

The processing module is used to store a received second debugging instruction and generate a wake-up instruction for awakening the applet.

The first debugging module 1003 includes a first wake-up unit and a debugging unit.

The first wake-up unit is used to awaken the interrupted target debugging module according to the wake-up instruction.

The debugging unit is used to acquire the stored second debugging instruction, and debug the awakened target debugging module according to the stored second debugging instruction.

According to the embodiments of the present disclosure, the apparatus 1000 of debugging the applet may further include a first transmitting module.

The first transmitting module is used to transmit current running data of the applet before interrupting the target debugging module, in response to running to the target debugging module in the applet.

According to the embodiments of the present disclosure, the apparatus 1000 of debugging the applet may further include a second interruption module and a second debugging module.

The second interruption module is used to return the debugging result, and interrupt the target debugging module again to wait for a next second debugging instruction.

The second debugging module is used to debug the target debugging module according to the received next second debugging instruction.

According to the embodiments of the present disclosure, the applet may contain a plurality of target debugging modules. The apparatus 1000 of debugging the applet may further include a third interruption module and a first running module.

The third interruption module is used to return the debugging result for a current target debugging module, and interrupt the current target debugging module to wait for a third debugging instruction.

The first running module is used to end the current target debugging module and run to a subsequent target debugging module in the applet, according to the received third debugging instruction.

According to the embodiments of the present disclosure, the apparatus 1000 of debugging the applet may further include a fourth interruption module and a second running module.

The fourth interruption module is used to return the debugging result for the current target debugging module, and interrupt the current target debugging module to wait for a fourth debugging instruction.

The second running module is used to end the current target debugging module, cancel a selection of the target debugging module, and run the applet until the first debugging instruction is received again, according to the received fourth debugging instruction.

According to the embodiments of the present disclosure, the apparatus 1000 of debugging the applet may further include a second transmitting module.

The second transmitting module is used to transmit a release message after canceling the selection of the target debugging module, and the release message indicates that the selection of the target debugging module is canceled.

According to the embodiments of the present disclosure, the selecting the target debugging module, the running the applet and the debugging the target debugging module are executed in the first thread, the first debugging instruction and the second debugging instruction are received in the second thread, and the debugging result is returned in the second thread.

According to the embodiments of the present disclosure, the applet is run in a simulated environment or a real environment.

FIG. 11 shows a block diagram of an apparatus of debugging an applet according to an embodiment of the present disclosure.

As shown in FIG. 11, an apparatus 1100 of debugging an applet may include a first transmitting module 1101, a second transmitting module 1102, and a first receiving module 1103.

The first transmitting module 1101 is used to transmit a first debugging instruction indicating that at least one debugging module of the plurality of debugging modules is selected as a target debugging module.

The second transmitting module 1102 is used to transmit a second debugging instruction for debugging the target debugging module, in response to receiving running data of the applet when running to the target debugging module in the applet.

The first receiving module 1103 is used to receive a debugging result for the target debugging module.

According to the embodiments of the present disclosure, the apparatus 1100 of debugging the applet may further include a third transmitting module.

The third transmitting module is used to transmit at least one of a third debugging instruction or a fourth debugging instruction in response to receiving a returned debugging result. The third debugging instruction indicates ending the current target debugging module and running to a subsequent target debugging module in the applet. The fourth debugging instruction indicates ending the current target debugging module, canceling a selection of the target debugging module, and running the applet until the first debugging instruction is received again.

According to the embodiments of the present disclosure, the apparatus 1100 of debugging the applet may further include a second receiving module.

The second receiving module is used to receive a release message indicating that a selection of the target debugging module is canceled.

In the technical solutions of the present disclosure, the acquisition, storage, use, processing, transmission, provision, and disclosure of information involved are in compliance with relevant laws and regulations, and does not violate public order and good customs.

According to the embodiments of the present disclosure, the present disclosure further provides an electronic device, a readable storage medium, and a computer program product. The computer program product may contain a computer program that, when executed by a computer, causes the computer to implement the methods described above.

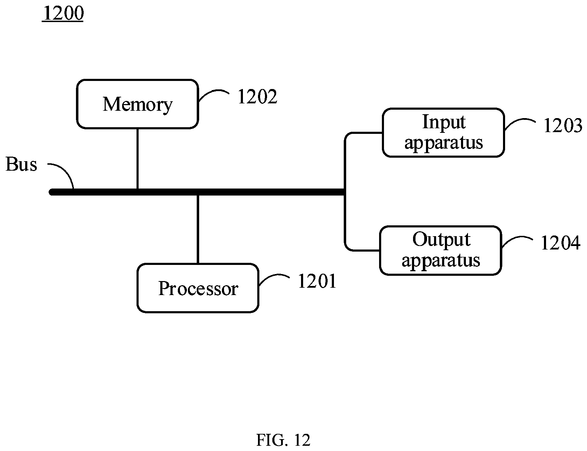

FIG. 12 shows a block diagram of an electronic device for implementing a method of debugging an applet according to an embodiment of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile apparatuses, such as a personal digital assistant, a cellular phone, a smart phone, a wearable device, and other similar computing apparatuses. The components as illustrated herein, and connections, relationships, and functions thereof are merely examples, and are not intended to limit the implementation of the present disclosure described and/or required herein.

As shown in FIG. 12, an electronic device 1200 may include one or more processors 1201, a memory 1202, and interfaces for connecting various components, including a high-speed interface and a low-speed interface. The various components are connected to each other by using different buses, and may be installed on a common motherboard or installed in other manners as required. The processor may process instructions executed in the electronic device, including instructions stored in or on the memory to display graphical information of GUI (Graphical User Interface) on an external input/output apparatus (such as a display device coupled to an interface). In other embodiments, a plurality of processors and/or a plurality of buses may be used with a plurality of memories, if necessary. Similarly, a plurality of electronic devices may be connected in such a manner that each device providing a part of necessary operations (for example, as a server array, a group of blade servers, or a multi-processor system). In FIG. 12, a processor 1201 is illustrated by way of example.

The memory 1202 is a non-transitory computer-readable storage medium provided by the present disclosure. The memory stores instructions executable by at least one processor, to cause the at least one processor to implement the method of debugging the applet provided in the present disclosure. The non-transitory computer-readable storage medium of the present disclosure stores computer instructions for allowing a computer to implement the method of debugging the applet provided in the present disclosure.

The memory 1202, as a non-transitory computer-readable storage medium, may be used to store non-transitory software programs, non-transitory computer-executable programs and modules, such as the program instructions/modules corresponding to the method of debugging the applet in the embodiments of the present disclosure (for example, the selecting module 1001, the first interruption module 1002 and the first debugging module 1003 shown in FIG. 10, and/or the first transmitting module 1101, the second transmitting module 1102 and the first receiving module 1103 shown in FIG. 11). The processor 1201 executes various functional applications and data processing of the server by executing the non-transient software programs, instructions and modules stored in the memory 1202, so as to implement the method of debugging the applet in the embodiments of the method described above.

The memory 1202 may include a program storage area and a data storage area. The program storage area may store an operating system and an application required by at least one function. The data storage area may store data etc. generated by using the electronic device for implementing the method of debugging the applet. In addition, the memory 1202 may include a high-speed random access memory, and may further include a non-transitory memory, such as at least one magnetic disk storage device, a flash memory device, or other non-transitory solid-state storage devices. In some embodiments, the memory 1202 may optionally include a memory provided remotely with respect to the processor 1201, and such remote memory may be connected through a network to the electronic device 1200 for implementing the method of debugging the applet. Examples of the above-mentioned network include, but are not limited to the Internet, intranet, local area network, mobile communication network, and combination thereof.

The electronic device 1200 for implementing the method of debugging the applet may further include an input apparatus 1203 and an output apparatus 1204. The processor 1201, the memory 1202, the input apparatus 1203 and the output apparatus 1204 may be connected by a bus or in other manners. In FIG. 12, the connection by a bus is illustrated by way of example.

The input apparatus 1203 may receive input information of numbers or character, and generate key input signals related to user settings and function control of the electronic device 1200 for implementing the method of debugging the applet, such as a touch screen, a keypad, a mouse, a track pad, a touchpad, a pointing stick, one or more mouse buttons, a trackball, a joystick, and so on. The output apparatus 1204 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in a digital electronic circuit system, an integrated circuit system, an application specific integrated circuit (ASIC), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from the storage system, the at least one input apparatus and the at least one output apparatus, and may transmit the data and instructions to the storage system, the at least one input apparatus, and the at least one output apparatus.

These computing programs (also referred as programs, software, software applications, or codes) include machine instructions for a programmable processor, and may be implemented using high-level programming languages, object-oriented programming languages, and/or assembly/machine languages. As used herein, the terms "machine-readable medium" and "computer-readable medium" refer to any computer program product, device and/or apparatus (for example, magnetic disk, optical disk, memory, programmable logic apparatus (PLD)) for providing machine instructions and/or data to a programmable processor, including a machine-readable medium for receiving machine instructions as machine-readable signals. The term "machine-readable signal" refers to any signal for providing machine instructions and/or data to a programmable processor.

In order to provide interaction with the user, the systems and technologies described here may be implemented on a computer including a display apparatus (for example, a CRT (cathode ray tube) or LCD (liquid crystal display) monitor) for displaying information to the user, and a keyboard and a pointing apparatus (for example, a mouse or a trackball) through which the user may provide the input to the computer. Other types of apparatuses may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. The relationship between the client and the server is generated through computer programs running on the corresponding computers and having a client-server relationship with each other.

According to the embodiments of the present disclosure, at least one debugging module of the plurality of debugging modules is selected as the target debugging module according to the first debugging instruction, the applet is run so that the target debugging module is interrupted when running to the target debugging module in the applet, and the interrupted target debugging module is awakened for debugging according to the second debugging instruction, so as to generate a debugging result. Because the target debugging module is interrupted to wait for the debugging instruction when running to the target debugging module in the applet, and the target debugging module is awakened for debugging after receiving the debugging instruction, the breakpoint debugging for the applet may be achieved, and the debugging efficiency may be improved.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the protection scope of the present disclosure. Those skilled in the art should understand that various modifications, combinations, sub-combinations and substitutions may be made according to design requirements and other factors. Any modifications, equivalent replacements and improvements made within the principles of the present disclosure shall be contained in the scope of protection of the present disclosure.

## Claims

1. A method of debugging an applet executed by a simulator or client, wherein debugging codes are written into the applet, so that the applet is divided into a plurality of debugging modules by the debugging codes written to the applet,
the method comprising:
selecting (S210), in a first thread of the simulator or client, at least one debugging module from the plurality of debugging modules as a target debugging module according to a first debugging instruction;
running (S220), in the first thread, the applet so that the target debugging module is interrupted in response to running to the target debugging module in the applet;
a second thread of the simulator or client storing a received second debugging instruction in a shared memory of the simulator or client, and generating a wake-up instruction, and transmitting the wake-up instruction to the first thread so as to awaken the interrupted target debugging module, wherein the first thread and the second thread communicate through the shared memory;
awakening (S331) the interrupted target debugging module according to the wake-up instruction; and
acquiring (S332) the stored second debugging instruction, and debugging (S332) the awakened target debugging module according to the stored second debugging instruction.

2. The method of claim 1, further comprising:
transmitting current running data of the applet before interrupting the target debugging module, in response to running to the target debugging module in the applet.

3. The method of any one of preceding claims, further comprising:
returning (S410) the debugging result, and interrupting (S410) the target debugging module again to wait for a next second debugging instruction; and
debugging (S420) the target debugging module according to the received next second debugging instruction.

4. The method of any one of preceding claims, wherein the method further comprises: for a plurality of target debugging modules,
returning (S510) the debugging result for a current target debugging module, and interrupting (S510) the current target debugging module to wait for a third debugging instruction; and
ending (S520) the current target debugging module and running (S520) to a subsequent target debugging module in the applet, according to the received third debugging instruction.

5. The method of any one of preceding claims, wherein the method further comprises: for a plurality of target debugging modules,
returning (S610) the debugging result for a current target debugging module, and interrupting (S610) the current target debugging module to wait for a fourth debugging instruction; and
ending (S620) the current target debugging module, canceling (S620) a selection of the target debugging module, and running (S620) the applet until the first debugging instruction is received again, according to the received fourth debugging instruction.

6. The method of any one of preceding claims, further comprising:
transmitting a release message after canceling the selection of the target debugging module, wherein the release message indicates that the selection of the target debugging module is canceled.

7. The method of any one of preceding claims, wherein the selecting the target debugging module, the running the applet and the debugging the target debugging module are executed in a first thread, the first debugging instruction and the second debugging instruction are received in a second thread, and the debugging result is returned in the second thread.

8. The method of any one of preceding claims, wherein the applet is run in a simulated environment or a real environment.

9. An electronic device (1200), comprising:
at least one processor (1201); and
a memory (1202) communicatively connected to the at least one processor (1201), wherein the memory (1202) stores instructions executable by the at least one processor (1201), and the instructions, when executed by the at least one processor (1201), cause the at least one processor (1201) to implement the method of any one of claims 1 to 8.

10. A non-transitory computer-readable storage medium having computer instructions stored thereon, wherein the computer instructions are configured to cause a processor to implement the method of any one of claims 1 to 8.

11. A computer program product containing a computer program, wherein the computer program, when executed by a processor, causes the processor to implement the method of any one of claims 1 to 8.

## Patentansprüche

1. Ein Verfahren zum Debugging eines Applets, das auf einem Simulator oder Client ausgeführt wird, wobei Debugging-Codes in das Applet geschrieben sind, so dass das Applet durch die Debugging-Codes, die in das Applet geschrieben sind, in eine Mehrzahl von Debugging-Modulen unterteilt ist,
wobei das Verfahren folgende Merkmale aufweist:
Auswählen (S210) in einem ersten Thread des Simulators oder Client zumindest eines Debugging-Moduls aus der Mehrzahl von Debugging-Modulen als ein Ziel-Debugging-Modul gemäß einem ersten Debugging-Befehl;
Ausführen (S220) des Applet in dem ersten Thread, so dass das Ziel-DebuggingModul ansprechend auf das Ausführen des Ziel-Debugging-Moduls in dem Applet unterbrochen wird;
wobei ein zweiter Thread des Simulators oder Client einen empfangenen zweiten Debugging-Befehl in einem gemeinsam verwendeten Speicher des Simulators oder Client speichert, und Erzeugen eines Aufweckbefehls, und Senden des Aufweckbefehls an den ersten Thread, um das unterbrochene Ziel-Debugging-Modul aufzuwecken, wobei der erste Thread und der zweite Thread durch den gemeinsam verwendeten Speicher kommunizieren;
Aufwecken (S331) des unterbrochenen Ziel-Debugging-Moduls gemäß dem Aufweckbefehl; und
Erfassen (S332) des gespeicherten zweiten Debugging-Befehls und Debugging (S332) des aufgeweckten Ziel-Debugging-Modul gemäß dem gespeicherten zweiten Debugging-Befehl.

2. Das Verfahren nach Anspruch 1, das ferner aufweist:
Senden momentaner Ausführungsdaten des Applets, bevor das Ziel-Debugging-Modul unterbrochen wird, ansprechend auf das Ausführen des Ziel-Debugging-Moduls in dem Applet.

3. Das Verfahren gemäß einem der vorhergehenden Ansprüche, das ferner aufweist:
Zurückgeben (S410) des Debugging-Ergebnisses, und wieder Unterbrechen (S410) des Ziel-Debugging-Moduls, um auf einen nächsten zweiten Debugging-Befehl zu warten; und
Debugging (S420) des Ziel-Debugging-Moduls gemäß dem empfangenen nächsten zweiten Debugging-Befehl.

4. Das Verfahren gemäß einem der vorhergehenden Ansprüche, wobei das Verfahren ferner aufweist: für eine Mehrzahl von Ziel-Debugging-Modulen,
Zurückgeben (S510) des Debugging-Ergebnisses für ein momentanes Ziel-Debugging-Modul, und Unterbrechen (S510) des momentanen Ziel-Debugging-Moduls, um auf einen dritten Debugging-Befehl zu warten; und
Beenden (S520) des momentanen Ziel-Debugging-Moduls und Weitergehen (S520) zu einem nachfolgenden Ziel-Debugging-Modul in dem Applet gemäß dem empfangenen dritten Debugging-Befehl.

5. Das Verfahren nach einem beliebigen der vorhergehenden Ansprüche, wobei das Verfahren ferner aufweist: für eine Mehrzahl von Ziel-Debugging-Modulen,
Zurückgeben (S610) des Debugging-Ergebnisses für ein momentanes Ziel-Debugging-Modul und Unterbrechen (S610) des momentanen Ziel-Debugging-Moduls, um auf einen vierten Debugging-Befehl zu warten; und
Beenden (S620) des momentanen Ziel-Debugging-Moduls, Abbrechen (S620) einer Auswahl des Ziel-Debugging-Moduls, und Ausführen (S620) des Applets, bis der erste Debugging-Befehl wieder empfangen wird, gemäß dem empfangenen vierten Debugging-Befehl.

6. Das Verfahren gemäß einem beliebigen der vorhergehenden Ansprüche, das ferner aufweist:
Senden einer Freigabenachricht nach dem Abbrechen der Auswahl des Ziel-Debugging-Moduls, wobei die Freigabenachricht anzeigt, dass die Auswahl des Ziel-Debugging-Moduls abgebrochen ist.

7. Das Verfahren gemäß einem beliebigen der vorhergehenden Ansprüche, bei dem die Auswahl des Ziel-Debugging-Moduls, das Ausführen des Applets und das Debugging des Ziel-Debugging-Moduls in einem ersten Thread ausgeführt werden, wobei der erste Debugging-Befehl und der zweite Debugging-Befehl in einem zweiten Thread empfangen werden, und wobei das Debugging-Ergebnis in dem zweiten Thread zurückgegeben wird.

8. Das Verfahren gemäß einem beliebigen der vorhergehenden Ansprüche, bei dem das Applet in einer simulierten Umgebung oder einer realen Umgebung ausgeführt wird.

9. Eine elektronische Vorrichtung (1200) mit folgenden Merkmalen:
zumindest einem Prozessor (1201); und
einem Speicher (1202), der mit dem zumindest einen Prozessor (1201) kommunikativ gekoppelt ist, wobei der Speicher Befehle, die durch den zumindest einen Prozessor (1201) ausführbar sind, speichert, und wobei die Befehle, wenn sie durch den zumindest einen Prozessor (1201) ausgeführt werden, bewirken, dass der zumindest eine Prozessor (1201) das Verfahren nach einem der Ansprüche 1 bis 8 implementiert.

10. Ein nicht-flüchtiges Computer-lesbares Speichermedium, auf dem Computerbefehle gespeichert sind, wobei die Computerbefehle konfiguriert sind, um einen Prozessor zu veranlassen, das Verfahren nach einem der Ansprüche 1 bis 8 zu implementieren.

11. Ein Computerprogrammprodukt, das ein Computerprogramm enthält, wobei das Computerprogramm, wenn es durch einen Prozessor ausgeführt wird, den Prozessor veranlasst, das Verfahren nach einem der Ansprüche 1 bis 8 zu implementieren.

## Revendications

1. Procédé de débogage d'un applet exécuté par un simulateur ou un client, dans lequel les codes de débogage sont écrits dans l'applet, de sorte que l'applet soit divisé en une pluralité de modules de débogage par les codes de débogage écrits dans l'applet,
le procédé comprenant le fait de:
sélectionner (S210), dans un premier fil conducteur du simulateur ou du client, au moins un module de débogage parmi la pluralité de modules de débogage comme module de débogage cible selon une première instruction de débogage;
exécuter (S220), dans le premier fil conducteur, l'applet de sorte que le module de débogage cible soit interrompu en réponse à l'exécution du module de débogage cible dans l'applet;
un deuxième fil conducteur du simulateur ou du client mémorisant une deuxième instruction de débogage reçue dans une mémoire partagée du simulateur ou du client, et générer une instruction de réveil, et transmettre l'instruction de réveil au premier fil conducteur de manière à réveiller le module de débogage cible interrompu, où le premier fil conducteur et le deuxième fil conducteur communiquent à travers la mémoire partagée;
réveiller (S331) le module de débogage cible interrompu selon l'instruction de réveil; et
acquérir (S332) la deuxième instruction de débogage mémorisée, et déboguer (S332) le module de débogage cible réveillé selon la deuxième instruction de débogage mémorisée.

2. Procédé selon la revendication 1, comprenant par ailleurs le fait de:
transmettre les données d'exécution actuelles de l'applet avant d'interrompre le module de débogage cible, en réponse au fait de se diriger vers le module de débogage cible dans l'applet.

3. Procédé selon l'une quelconque des revendications précédentes, comprenant par ailleurs le fait de:
retourner (S410) le résultat de débogage, et interrompre (S410) à nouveau le module de débogage cible pour attendre une deuxième instruction de débogage suivante; et
déboguer (S420) le module de débogage cible selon la deuxième instruction de débogage suivante reçue.

4. Procédé selon l'une quelconque des revendications précédentes, dans lequel le procédé comprend par ailleurs le fait de: pour une pluralité de modules de débogage cibles,
retourner (S510) le résultat de débogage pour un module de débogage cible actuel, et interrompre (S510) le module de débogage cible actuel pour attendre une troisième instruction de débogage; et
terminer (S520) le module de débogage cible actuel et se diriger (S520) vers un module de débogage cible suivant dans l'applet, selon la troisième instruction de débogage reçue.

5. Procédé selon l'une quelconque des revendications précédentes, dans lequel le procédé comprend par ailleurs le fait de: pour une pluralité de modules de débogage cibles,
retourner (S610) le résultat de débogage pour un module de débogage cible actuel, et interrompre (S610) le module de débogage cible actuel pour attendre une quatrième instruction de débogage; et
terminer (S620) le module de débogage cible actuel, annuler (S620) une sélection du module de débogage cible et exécuter (S620) l'applet jusqu'à ce que soit à nouveau reçue la première instruction de débogage, selon la quatrième instruction de débogage reçue.

6. Procédé selon l'une quelconque des revendications précédentes, comprenant par ailleurs le fait de:
transmettre un message de libération après l'annulation de la sélection du module de débogage cible, où le message de libération indique que la sélection du module de débogage cible est annulée.

7. Procédé selon l'une quelconque des revendications précédentes, dans lequel la sélection du module de débogage cible, l'exécution de l'applet et le débogage du module de débogage cible sont exécutés dans un premier fil conducteur, la première instruction de débogage et la deuxième instruction de débogage sont reçues dans un deuxième fil conducteur, et le résultat du débogage est retourné dans le deuxième fil conducteur.

8. Procédé selon l'une quelconque des revendications précédentes, dans lequel l'applet est exécuté dans un environnement simulé ou un environnement réel.

9. Dispositif électronique (1200), comprenant:
au moins un processeur (1201); et
une mémoire (1202) connectée de manière communicative à l'au moins un processeur (1201), où la mémoire (1202) mémorise des instructions pouvant être exécutées par l'au moins un processeur (1201), et les instructions, lorsqu'elles sont exécutées par l'au moins un processeur (1201), amènent l'au moins un processeur (1201) à mettre en oeuvre le procédé selon l'une quelconque des revendications 1 à 8.

10. Support de mémoire non transitoire lisible par ordinateur présentant, y mémorisées, des instructions informatiques, dans lequel les instructions informatiques sont configurées pour amener un processeur à mettre en oeuvre le procédé selon l'une quelconque des revendications 1 à 8.

11. Produit de programme informatique contenant un programme informatique, dans lequel le programme informatique, lorsqu'il est exécuté par un processeur, amène le processeur à mettre en oeuvre le procédé selon l'une quelconque des revendications 1 à 8.
